# EUROPÄISCHE PATENTANMELDUNG

(11) **EP 4 848 150 A1**
(43) Veröffentlichungstag der Anmeldung: **02.12.2026**
(21) Anmeldenummer: 25179040.8
(22) Anmeldetag: 27.05.2025
(51) Int. Cl.: G06N 3/098, G06N 3/096, G05B 13/02

(54) **VERFAHREN UND SYSTEM ZUM BETRIEB EINES TECHNISCHEN GERÄTS MIT EINER STEUERVORRICHTUNG**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Betrieb eines technischen Geräts (TD1-TD3) mit einer Steuervorrichtung (CD1-CD3), und folgende Schritte ausgeführt werden:
a) Bereitstellen eines Grund-Modells (FM) und eines Referenz-Datensatzes (REF_DS),
b) Bereitstellen von jeweiligen trainierten lokalen Modellen (LM1-LM3) und des Referenz-Datensatzes (REF_DS),
c) Durchführen einer jeweiligen Inferenz für das lokale Modell (LM1-LM3) mit dem Referenz-Datensatz (REF_DS) durch den jeweiligen Klienten (C1-C3),
d) Berechnen von zumindest einem jeweiligen Zielparameter durch den jeweiligen Klienten (C1-C3), welcher eine statistische Verteilungsfunktion zumindest eines Teils des lokalen Modells (LM1-LM3) umfasst,
e) Übermitteln der jeweiligen lokalen Modelle (LM1-LM3) an den Server (S), und Aggregieren der lokalen Modelle (LM1-LM3) unter Anwendung des zumindest einen jeweiligen Zielparameters zu einem globalen Modell (GM), wobei ein vorbestimmter Anwendungs-Wertebereich für den zumindest einen jeweiligen Zielparameter angewendet wird,
f) Durchführen einer Wissens-Destillation des globalen Modells (GM),
g) Übermitteln des globalen Modells (GM) an die Klienten (C1-C3),
h) Erzeugen von Steuerinstruktionen zum Betrieb des technischen Geräts (TD1-TD3) mithilfe des jeweiligen lokalen Modells (LM1-LM3) durch die jeweilige Steuervorrichtung (CD1-CD3), und Betreiben des jeweiligen technischen Geräts (TD1-TD3) durch die jeweilige Steuervorrichtung (CD1-CD3).

## Beschreibung

Die Erfindung betrifft ein computer-implementiertes Verfahren und ein Klienten-Server-System zum Betrieb eines technischen Geräts mit einer Steuervorrichtung, welche von einem jeweiligen Klienten des Klienten-Server-Systems mit einem Server und Klienten umfasst ist

Die Erfindung betrifft ferner ein Computer-Programm-Produkt.

In einer industriellen Umgebung ist die Datenerfassung für das Training von Basis- oder Grund-Modellen (engl. "foundation model", kurz FM) für Anwendungen auf Basis künstlicher Intelligenz eine Herausforderung, da umfangreiche und vielfältige Datensätze benötigt werden, deren Erfassung und Verwaltung ressourcenintensiv ist.

Die Sicherstellung der Datenqualität ist eine weitere Hürde, da große Datensätze oft Rauschen, Fehler und veraltete Informationen enthalten, was die Vorverarbeitung erschwert.

Datenschutzbedenken erschweren die Datenerfassung zusätzlich, insbesondere wenn es sich um sensible oder geschützte Informationen handelt, die die strikte Einhaltung von Vorschriften wie der Datenschutz-Grundverordnung, DSGVO, erfordern.

Datenschutz ist nicht nur eine Frage der direkten Datenweitergabe, sondern führt unweigerlich zu einer Frage der Systemsicherheit, Systemintegrität und Systemstabilität, falls Datensätze unbefugt entwendet oder kopiert werden, um ein System ungünstig zu beeinträchtigen.

Darüber hinaus fügt die Integration heterogener Datenquellen aus verschiedenen Systemen in ein einheitliches Format dem Prozess eine weitere Komplexitätsebene hinzu.

Das Konzept des föderierten Lernens (engl. "federated learning", kurz FL) kann helfen, indem Modelle direkt auf Edge-Geräten mit lokalen Daten trainiert werden können, was den Datenschutz erhöht und die Notwendigkeit reduziert, große Datensätze an einen zentralen Server zu übertragen.

Dieser Ansatz ist besonders nützlich in industriellen Umgebungen, in denen Daten sensibel oder über viele Standorte verteilt sind, wobei häufig Klienten-Server-Systeme eingesetzt werden, und die Klienten durch ein oder mehrere lokale Edge-Geräte je Standort gebildet sind.

Föderiertes Lernen ist jedoch eine Herausforderung aufgrund der begrenzten Rechenressourcen auf Edge-Geräten, die den hohen Anforderungen des Trainings von Modellen auf Basis künstlicher Intelligenz, kurz Kl, nur schwer gewachsen sind.

Darüber hinaus erhöht die Sicherstellung konsistenter Modellaktualisierungen und Synchronisierungen über viele Geräte hinweg, die jeweils über unterschiedliche Verbindungsarten und Rechenleistungen verfügen, die Komplexität des Trainingsprozesses.

Im Stand der Technik sind zentrale Trainings-Ansätze bekannt, welche einen einheitlichen Datenzugriff vorsehen, denn eine zentralisierte Datenerfassung ermöglicht ein umfassendes Modelltraining mit direktem Zugriff auf alle verfügbaren Daten.

Dabei wird eine hohe Rechenleistung genutzt, welche durch zentralisierte, leistungsfähigere Ressourcen eines Servers bereitgestellt wird und ein schnelleres und effizienteres Training großer Modelle ermöglichen.

Ein weiterer Vorteil zentraler Systeme ist eine einfachere Implementierung, was eine einfache Verwaltung und Aktualisierung eines einzigen, zentralen Modells erlaubt, wobei keine Kenntnis über die Variabilität der an Klienten verbundenen Geräte vorliegen muss.

Demgegenüber stehen Fragen des Datenschutzes, denn zentralisiertes Lernen erfordert, dass Daten an einen zentralen Ort übertragen werden, womit Datenschutz- und Sicherheitsbedenken verbunden sind.

Außerdem können die Kosten für eine Datenübertragung von Klienten zu zentralen Servern kann aufwändig, kostspielig und logistisch komplex sein.

Auf der anderen Seite kann föderiertes Lernen Datenschutz-Aspekte verbessern, denn Daten verbleiben auf lokalen Geräten, wodurch Datenschutzrisiken, Sicherheits- und Compliance-Bedenken reduziert werden.

Ferner ermöglicht dezentrales Training von FL das Modelltraining über verschiedene und verteilte Datenquellen hinweg ohne eine zentrale Datenerfassung.

Zusätzlich wird die System-Skalierbarkeit und die resultierende Modell-Genauigkeit verbessert, denn eine Systemlösung kann auf eine große Anzahl von Geräten skaliert werden, die jeweils wiederum zur Modellverbesserung beitragen.

Allerding liegen an Klienten oftmals Ressourcenbeschränkungen vor, denn Edge-Geräten fehlt oft die Rechenleistung, um große Modelle effektiv zu trainieren.

Außerdem wird ein Kommunikations-Overhead benötigt, denn häufige Synchronisierungen zwischen Geräten und dem zentralen Server können langsam und ineffizient sein, insbesondere bei unterschiedlichen Verbindungsarten.

Es ist daher Aufgabe der Erfindung eine einfach skalierbare Lösung für verteilte Systeme bereitzustellen, bei welcher das Modell-Training einfach und effizient durchgeführt werden kann, und die Modell-Genauigkeit und Modell-Leistung deutlich gegenüber bekannten Lösungen verbessert werden kann, insbesondere auf Edge-Geräten mit einfachen Ressourcen.

Die erfindungsgemäße Aufgabe wir durch ein computer-implementiertes Verfahren zum Betrieb eines technischen Geräts mit einer Steuervorrichtung, welche von einem jeweiligen Klienten eines Klienten-Server-Systems mit einem Server und Klienten umfasst ist, und folgende Schritte ausgeführt werden:
a) Bereitstellen eines Grund-Modells und eines Referenz-Datensatzes an den Server,
b) Bereitstellen von jeweiligen trainierten lokalen Modellen und des Referenz-Datensatzes an die jeweiligen Klienten,
c) Durchführen einer jeweiligen Inferenz für das lokale Modell mit dem Referenz-Datensatz durch den jeweiligen Klienten,
d) Berechnen von zumindest einem jeweiligen Zielparameter durch den jeweiligen Klienten, welcher eine statistische Verteilungsfunktion zumindest eines Teils des lokalen Modells umfasst,
e) Übermitteln der jeweiligen lokalen Modelle an den Server, und Aggregieren der lokalen Modelle unter Anwendung des zumindest einen jeweiligen Zielparameters zu einem globalen Modell, wobei ein vorbestimmter Anwendungs-Wertebereich für den zumindest einen jeweiligen Zielparameter angewendet wird,
f) Durchführen einer Wissens-Destillation des globalen Modells, durch den Server,
g) Übermitteln des globalen Modells an die Klienten,
h) Erzeugen von Steuerinstruktionen zum Betrieb des technischen Geräts mithilfe des jeweiligen lokalen Modells durch die jeweilige Steuervorrichtung, und Betreiben des jeweiligen technischen Geräts durch die jeweilige Steuervorrichtung.

Zumindest ein Schritt des Verfahrens kann in einem Computer implementiert sein.

Das Klienten-Server-System verfügt über einen zentralen Server, welcher ein großes Basismodell, FM, bereitstellt, sowie einen Datensatz mit Referenzdaten.

Das technische Gerät kann beispielsweise eine Pumpe, eine elektronische Regelungs-Schaltung, eine Bearbeitungsmaschine wie eine CNC-Fräsmaschine, eine Produktionsmaschine wie ein Leiterplatten-Bestückungsautomat, eine Transportvorrichtung wie ein Förderband oder ein Roboter, oder dergleichen sein.

Das technische Gerät kann ferner beispielsweise ein Sensor oder eine Kamera sein, welche beispielsweise Betriebsparameter beim Betrieb einer Produktionsvorrichtung erfassen, wie die Anzahl oder Eigenschaften eines hergestellten Produkts, oder die Leistungsaufnahme der Produktionsvorrichtung oder deren Zustand bei zugeführten Materialien oder Komponenten.

Erfasste Sensordaten können beispielsweise Daten von einer Strom-Messung, einer Spannungs-Messung, einer Datenübertragungs-Messung, einer Temperatur-, Druck- oder Vibrations-Messung, oder auch Stückzahlen, Abmessungen, Geometrien, Oberflächenbeschaffenheiten eines durch das technische Gerät in Form einer Produktions- oder Bearbeitungsanlage hergestellten Produkts, oder ähnliches sein.

Die Klienten des Klienten-Server-Systems weisen daher entsprechende Steuervorrichtungen auf, vorzugsweise jeweils zumindest eine elektronische Steuervorrichtung, welche dazu konfiguriert sind, ein verbundenes technisches Gerät mit entsprechenden Steuerinstruktionen zu betreiben, und dazu beispielsweise entsprechende elektronische Schaltungen aufweisen.

Klienten des Klienten-Server-Systems sind Edge-Geräte, welche am Endpunkt eines Netzwerks gelegen sind und die Schnittstelle zwischen Rechenzentrum und realer Welt bilden, wobei Edge-Geräte Daten von verbundenen technischen Geräten sammeln oder an den Server übermitteln.

Die Steuerung kann mittels analoger oder digitaler Signale erfolgen, oder auch mithilfe von Steuerinformationen, welche durch eine serielle oder parallele Datenschnittstelle an das technische Gerät übermittelt werden.

Die Steuerinstruktionen werden vom jeweiligen Klienten aus dem jeweiligen lokalen Kl-Modell abgeleitet und generiert und dienen beispielsweise dazu, ein Gerät anzusteuern oder Betriebs-Parameter oder Daten aus dem Betrieb des technischen Geräts abzurufen.

Betriebs-Parameter können beispielsweise dazu dienen, das technische Gerät für einen Dauerbetrieb so zu konfigurieren, um mithilfe von vorausschauender Wartung die WartungsIntervalle des technischen Geräts zu optimieren.

Betriebs-Parameter können beispielsweise dazu dienen, einen Betriebs-Modus für das technischen Gerät zu setzen, umzuschalten oder zu konfigurieren, oder auch den aktuellen Betriebs-Status des technischen Geräts oder Wartungs- beziehungsweise Verbrauchs-Werte aus dessen Betrieb auszulesen.

Daher können Betriebs-Parameter sowohl vom technischen Gerät bereitgestellte Daten als auch Daten zum Steuern oder Konfigurieren des technischen Geräts sein, welche beispielsweise mithilfe eines Modells auf Basis künstlicher Intelligenz oder maschinellen Lernens erzeugt werden.

Es ist klar, dass zum Betrieb des technischen Geräts weitere Betriebsmittel, wie eine Spannungsversorgung, Schmiermittel, zu bearbeitendes Ausgangsmaterial, Komponenten oder dergleichen, erforderlich sein können.

Verbundene Klienten-Geräte trainieren jeweilige lokale Modelle mit jeweiligen privaten Daten und verwenden dabei auch den vom Server bereitgestellten Referenzdatensatz, um zur Verbesserung des Basismodells beizutragen.

Zunächst erfolgt eine Initialisierung des Grund-Modells durch den Server.

Bei diesem Grund -Modell kann es sich um ein großes, komplexes neuronales Netzwerk handeln, welches als Basis für die Aggregation von Wissen von verschiedenen Klienten dient.

Dann werden die Referenzdaten vom Server an die Klienten-Geräte verteilt.

Dieser Referenz-Datensatz ist so konzipiert, dass die enthaltenen Daten repräsentativ für die Datenverteilung oder die Aufgaben von Interesse sind, aber nicht spezifisch für die privaten Daten eines einzelnen Klienten.

Anschließend erfolgt ein Modell-Training an den Klienten, also ein lokales Training mit privaten Daten, wobei ein jeweiliges Klienten-Gerät sein lokales Modell mit seinen dort bereitgestellten, privaten Daten trainiert.

Dieses Training hilft dem Klienten-Modell, sich an bestimmte Details, Nuancen und Muster innerhalb des eigenen Datensatzes anzupassen.

Dann wird eine Inferenz auf den Referenz-Datensatz ausgeführt, wobei nach dem lokalen Training mit dem so erzeugten Klienten-Modell eine Inferenz für das vom zentralen Server bereitgestellte Referenz-Datensatz durchgeführt wird.

In diesem Schritt werden Ausgaben oder Vorhersagen generiert, die erfassen, wie das Klienten-Modell die Verweisdaten interpretiert.

Anschließend erfolgt eine Extraktion von Wissen, wobei sogenannte "Soft Targets", also Zielparameter, generiert werden, welche Details zu Daten und Datenverteilungen liefern, beispielsweise Wahrscheinlichkeitsverteilungen über Klassen, wodurch es möglich ist, Einblicke in die Klassifizierung oder Verarbeitung der Referenzdaten durch das Klienten-Modell zu erhalten.

Optional können die Klienten-Modelle auch als Zielparameter "Zwischen-Feature"-Darstellungen aus ihren internen Layern bereitstellen, also Merkmale von Lagen des Modells, welche zwischen Eingangs-Knoten und Ausgangs-Knoten liegen, wodurch zusätzliche Einblicke in die Interpretation der Daten durch das Modell gegeben werden können.

Nachfolgend erfolgt eine Aggregation durch den Server, wobei die Soft-Targets oder Zwischenfunktionen von mehreren Klienten-Geräten zusammengeführt werden, beispielsweise durch Mittelung von Neuronen-Gewichten.

Diese aggregierten Daten spiegeln das kollektive Wissen und die unterschiedlichen Perspektiven der verschiedenen Kundenmodelle auf dem Referenz-Datensatz wider.

Der Destillationsprozess erfolgt, indem der Server das Grund-Modell unter Verwendung des aggregierten Wissens aktualisiert oder verfeinert.

Das Grund-Modell kann auf einen Kreuzentropie-Verlust trainiert werden, nämlich zwischen den Vorhersagen des Grund-Modells und den wahren Beschriftungen des Referenz-Datensatzes.

Das Grund-Modell kann ferner auf einen Destillations-Verlust trainiert werden, nämlich zwischen den Vorhersagen des Grund-Modells und den aggregierten Soft-Targets aus den Klienten-Modellen.

Danach erfolgten eine Modell-Bewertung und eine Modell-Verfeinerung.

Bei der Leistungsbewertung des Modells wird die Leistung des Grund-Modells anhand eines Validierungssatzes oder zusätzlicher Aufgaben bewertet, um sicherzustellen, dass da Modell von dem destillierten Wissen profitiert und seine Genauigkeit und Robustheit verbessert.

Bei der Verfeinerung werden Anpassungen und Verfeinerungen auf Basis der Auswertungsergebnisse vorgenommen, was eine Optimierung des Aggregationsprozesses oder die Verfeinerung der Art und Weise, wie Wissen destilliert wird, beinhalten kann.

Das aktualisierte Basismodell wird schließlich für eine breitere Nutzung an die Klienten bereitgestellt, wobei Erkenntnisse aus allen Klienten-Modellen berücksichtigt werden.

Der genannte Prozess kann iterativ sein, wobei der zentrale Server den Referenzdatensatz regelmäßig aktualisiert, und den Destillationsprozess wiederholt, wenn neue Klienten-Modelle ihr Wissen einbringen.

In einer Weiterbildung der Erfindung ist es vorgesehen, dass nach der Wissens-Destillation im Schritt f) folgende Schritte ausgeführt werden:
f1) Bestimmen zumindest eines Modell-Verlusts zwischen dem Grund-Modell und dem globalen Modell,
f2) Berechnen eines ersten Leistungs-Indikators für das Grund-Modell und eines zweiten Leistungs-Indikators für das globale Modell, jeweils mithilfe eines Validierungs-Datensatzes, jeweils hinsichtlich der Leistung des jeweiligen Modells bei der Anwendung des Validierungs-Datensatzes, und
f3) Fortfahren im Schritt g), wenn der erste und zweite Leistungs-Indikator innerhalb eines vorgegebenen Leistungs-Wertebereich liegt.

Dadurch wird erreicht, dass die resultierende Modell-Leistung verbessert wird.

In einer Weiterbildung der Erfindung ist es vorgesehen, dass der erste Leistungs-Indikator der Kreuzentropie-Verlust und/oder der zweite Leistungs-Indikator der Destillations-Verlust ist.

Die Kreuzentropie ist eine Metrik, die verwendet werden kann, um die Genauigkeit von probabilistischen Vorhersagen widerzuspiegeln und weist enge Verbindungen zur Maximum-Likelihood-Schätzung auf.

Kreuzentropie ist von zentraler Bedeutung für moderne Prognosesysteme, da sie die Möglichkeit bietet, überlegene Vorhersagen zu liefern, selbst wenn alternative Metriken zugrunde liegen, sowie sie die Schätzung von Modellen unterstützt, die auch gut darin sind, die Wahrscheinlichkeiten seltener Ereignisse zu erfassen, welche häufig die kostenintensivsten sind.

Beim konventionellen überwachten oder selbstüberwachten Lernen erzeugt eine Verlustfunktion einen Vektor, der die Divergenz - beziehungsweise den Verlust - zwischen den Ausgaben des Modells und den "richtigen" Ausgaben - der sogenannte "Ground Truth" - über verschiedene Eingaben hinweg darstellt.

Durch Anpassen der Modellparameter, um die Gradienten dieses Vektors durch einen Optimierungs-Algorithmus wie den Gradienten-Abstieg zu minimieren, kommen die Ausgaben des Modells diesen korrekten Ausgaben näher.

Die Argumentationsschritte des Modells sind zwar "wichtig", da sie die endgültigen Ausgaben beeinflussen, werden aber in der Regel nicht mit einer herkömmlichen Verlustfunktion gemessen.

Wissensdestillation hingegen trainiert das Schülermodell auch darauf, den Denkprozess des Lehrermodells nachzuahmen, indem eine spezielle Art von Verlustfunktion, der Destillationsverlust, hinzugefügt wird, bei welchem diskrete Denkschritte als weiche Ziele für die Optimierung verwendet werden.

Mit anderen Worten mach sich Wissensdestillation die Tatsache zunutze, dass künstliche neuronale Netze "universelle Approximatoren" sind, wobei bei genügend Trainingsdaten und einer ausreichend großen versteckten Schicht ein neuronales Netz jede Funktion mit beliebiger Genauigkeit approximiert werden kann.

Durch Anwendung von Kreuzentropie-Verlust und Destillations-Verlust kann auf besonders einfache Weise die resultierende Modell-Leistung weiter verbessert werden.

In einer Weiterbildung der Erfindung ist es vorgesehen, dass der Zielparameter Modell-Neuronen der jeweiligen lokalen Modelle umfasst, welche in Lagen des Modells gelegen sind, die zwischen Eingangs-Knoten und Ausgangs-Knoten des lokalen Modells liegen.

Dadurch kann auf besonders einfache Weise die resultierende Modell-Leistung weiter verbessert werden.

In einer Weiterbildung der Erfindung ist es vorgesehen, dass der jeweilige zumindest eine Zielparameter eine Einbettung ist.

Mithilfe von Einbettungen (engl. "embeddings") können komplexe Daten in einfache numerische Darstellungen umgewandelt werden.

Eine Einbettung ist eine verteilte Vektorrepräsentation von Daten und wandelt diskrete oder kategoriale Informationen in kontinuierliche Vektoren um.

Dadurch können auf einfache und effiziente Weise komplexe Daten bei einer Modellbildung berücksichtigt werden.

Die erfindungsgemäße Aufgabe wird auch durch ein Klienten-Server-System zum Betrieb eines technischen Geräts mit einer Steuervorrichtung gelöst, welche von einem jeweiligen Klienten des Klienten-Server-Systems mit einem Server und Klienten umfasst ist, und das Klienten-Server-System dazu eingerichtet ist, die erfindungsgemäßen Verfahrens-Schritte auszuführen.

Server und Klienten weisen jeweilige Rechenvorrichtungen, vorzugsweise mit Mikroprozessor, und Speicher auf.

Die erfindungsgemäße Aufgabe wird auch durch ein Computer-Programm-Produkt gelöst, umfassend Befehle, die bei der Ausführung des Programms durch das erfindungsgemäße Klienten-Server-System dieses veranlassen, das erfindungsgemäße Verfahren/die Schritte des erfindungsgemäßen Verfahrens auszuführen.

Es wird nun ein Ausführungsbeispiel der Erfindung anhand der nachfolgenden Figuren näher beschrieben. Die Figuren zeigen in
- Fig. 1: ein Ausführungsbeispiel für ein erfindungsgemäßes Klienten-Server-System,
- Fig. 2: ein Ausführungsbeispiel für ein erfindungsgemäßes Verfahren,
- Fig. 3: ein Beispiel zur Berechnung von Einbettungen in Form eines Pseudo-Codes,
- Fig. 4: ein Beispiel für die Anwendung von t-SNE in Form eines Pseudo-Codes.

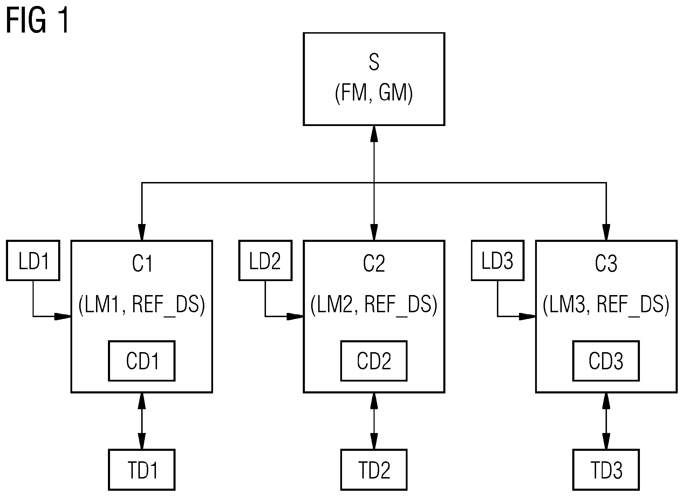

Fig. 1 stellt ein Ausführungsbeispiel für das erfindungsgemäße Klienten-Server-System zum Betrieb eines technischen Geräts TD1-TD3 mit einer jeweiligen Steuervorrichtung CD1-CD3 dar.

Das Klienten-Server-System umfasst eine Server S und drei Klienten C1-C3.

Die jeweilige Steuervorrichtung CD1-CD3 ist von dem jeweiligen Klienten C1-C3 umfasst.

Das Klienten-Server-System ist dazu eingerichtet, die erfindungsmäßen Verfahrens-Schritte auszuführen.

Zumindest ein Schritt des Verfahrens ist in einem Computer implementiert.

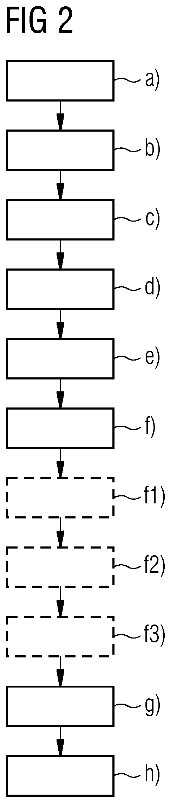

Fig. 2 zeigt ein Ausführungsbeispiel für das erfindungsgemäße computer-implementierte Verfahren zum Betrieb des technischen Geräts TD1-TD3 mit der jeweiligen Steuervorrichtung CD1-CD3.

Folgende Schritte werden ausgeführt:
a) Bereitstellen eines Grund-Modells FM und eines Referenz-Datensatzes REF_DS an den Server S,
b) Bereitstellen von jeweiligen trainierten lokalen Modellen LM1-LM3 und des Referenz-Datensatzes REF_DS an die jeweiligen Klienten C1-C3,
c) Durchführen einer jeweiligen Inferenz für das lokale Modell LM1-LM3 mit dem Referenz-Datensatz REF_DS durch den jeweiligen Klienten C1-C3,
d) Berechnen von zumindest einem jeweiligen Zielparameter durch den jeweiligen Klienten C1-C3, welcher eine statistische Verteilungsfunktion zumindest eines Teils des lokalen Modells umfasst,
e) Übermitteln der jeweiligen lokalen Modelle LM1-LM3 an den Server S, und Aggregieren der lokalen Modelle LM1-LM3 unter Anwendung des zumindest einen jeweiligen Zielparameters zu einem globalen Modell GM, wobei ein vorbestimmter Anwendungs-Wertebereich für den zumindest einen jeweiligen Zielparameter angewendet wird,
f) Durchführen einer Wissens-Destillation des globalen Modells GM, durch den Server S,
   f1) Bestimmen zumindest eines Modell-Verlusts zwischen dem Grund-Modell FM und dem globalen Modell GM,
   f2) Berechnen eines ersten Leistungs-Indikators für das Grund-Modell FM und eines zweiten Leistungs-Indikators für das globale Modell GM, jeweils mithilfe eines Validierungs-Datensatzes, jeweils hinsichtlich der Leistung des jeweiligen Modells bei der Anwendung des Validierungs-Datensatzes, und
   f3) Fortfahren im Schritt g, wenn der erste und zweite Leistungs-Indikator innerhalb eines vorgegebenen Leistungs-Wertebereich liegt.
g) Übermitteln des globalen Modells GM an die Klienten C1-C3,
h) Erzeugen von Steuerinstruktionen zum Betrieb des technischen Geräts TD1-TD3 mithilfe des jeweiligen lokalen Modells LM1-LM3 durch die jeweilige Steuervorrichtung CD1-CD3, und Betreiben des jeweiligen technischen Geräts TD1-TD3 durch die jeweilige Steuervorrichtung CD1-CD3.

Der erste Leistungs-Indikator kann der Kreuzentropie-Verlust sein.

Der zweite Leistungs-Indikator kann der Destillations-Verlust sein.

Der Zielparameter kann Modell-Neuronen der jeweiligen lokalen Modelle LM1-LM3 umfassen, welche in Lagen des Modells gelegen sind, die zwischen Eingangs-Knoten und Ausgangs-Knoten des lokalen Modells LM1-LM3 liegen.

Der jeweilige Anwendungs-Wertebereich kann einen Schwellwert für den jeweiligen Zielparameter bilden.

Um einen vielfältigen Referenzdatensatz für die Klienten C1-C3 zu erstellen und die Klienten C1-C3 basierend auf der Ähnlichkeit von Zielparametern wie Einbettungen auszuwählen, kann wie folgt vorgegangen werden.

Einbettungen (engl. "embeddings") spielen eine zentrale Rolle in der KI, denn sie ermöglichen es, komplexe Daten in einfache numerische Darstellungen umzuwandeln.

Einbettungen können es Maschinen ermöglichen, semantische Beziehungen zwischen Wörtern oder Konzepten zu verstehen, wobei ähnliche Begriffe in einem gut trainierten Einbettungs-Modell näher beieinander liegen.

Eine Einbettung ist eine verteilte Vektorrepräsentation von Daten und wandelt diskrete oder kategoriale Informationen in kontinuierliche Vektoren um, wobei diese Vektoren typischerweise in einem Bereich von -1 bis 1 oder 0 bis 1 liegen.

Dementsprechend kann der jeweilige zumindest eine Zielparameter eine Einbettung sein.

Jeweilige Zielparameter umfassen somit eine statistische Verteilungsfunktion zumindest eines Teils des lokalen Modells LM1-LM3.

Bei der Erstellung eines Referenz-Datensatzes REF_DS werden Kategorien oder Funktionen identifiziert, welche für die Anwendung, also die Verwendung des technischen Geräts TD1-TD3 wichtig sind.

Wenn es sich beispielsweise um eine Bildklassifizierungs-Aufgabe handelt, können diese verschiedene Objektkategorien, Umgebungen und Bedingungen umfassen.

Dabei wird die erforderliche Vielfalt für den Datensatz bestimmt, um sicherzustellen, dass eine Vielzahl von Instanzen innerhalb jeder Kategorie oder Funktion erfasst wird.

Anschließend wird eine große Menge an Bildern aus verschiedenen Quellen für den Referenz-Datensatz REF_DS gesammelt, um die Abdeckung verschiedener Kategorien und Funktionen sicherzustellen.

Der Referenz-Datensatz REF_DS wird "gepflegt", beispielsweise werden Duplikate, irrelevante oder minderwertige Bilder gefiltert und entfernt.

Ferner wird sichergestellt, dass die Bilder über verschiedene Kategorien oder Merkmale hinweg ausgewogen sind, beispielsweise nach Anwendung, Wahrscheinlichkeitsverteilungen und dergleichen, um Verzerrungen im resultierenden Modell zu vermeiden.

Dann wird ein Modell für Einbettungen trainiert, indem zunächst ein vortrainiertes Modell, wie beispielsweise ResNet oder "Inception", ausgewählt wird, oder ein Modell speziell für die Einbettung der Extraktion trainiert wird.

Anschließend erfolgt eine Merkmals-Extraktion, bei welcher sowohl der Referenz-Datensatz REF_DS als auch die privaten Datasets der jeweiligen Klienten C1-C3 durch das Modell, um Merkmals-Einbettungen zu extrahieren.

Dann erfolgt eine Einbettung der Extraktion, also von Referenzdatensätzen.

Dabei werden die Bilder des Referenz-Datensatzes REF_DS durch das Modell eingefügt und Einbettungen aus einer bestimmten Lage des Modells, wie beispielsweise vor der Klassifizierungs-Lage, extrahiert.

Ferner werden auf ähnliche Weise Zielparameter, wie Einbettungen für Bilder in privaten, lokalen Datensätzen LD1-LD3 eines jeweiligen Klienten C1-C3 extrahiert.

In weiterer Folge wird eine Dimensionalitäts-Reduktion angewendet.

Dies kann beispielsweise anhand des Verfahrens "t-Distributed Stochastic Neighbor Embedding", kurz t-SNE erfolgen, um die Dimensionalität der Einbettungen für die Visualisierung und Ähnlichkeitsberechnung zu reduzieren.

t-SNE ist eine unüberwachte nichtlineare Dimensionalitäts-Reduktionstechnik für die Datenexploration und Visualisierung hochdimensionaler Daten, wobei eine nichtlineare Dimensionalitäts-Reduktion bedeutet, dass der Algorithmus ermöglicht, Daten zu trennen, die nicht durch eine gerade Linie getrennt werden können.

Dabei werden geeignete Parameter wie Verwirrungs-Werte (engl. "perplexity value") und eine Lernrate verwendet, um ein Gleichgewicht zwischen lokaler und globaler Strukturerhaltung herzustellen.

Perplexität ist der vielleicht wichtigste Parameter in t-SNE und kann verschiedene Aspekte der Daten aufdecken, wobei sie als Balance zwischen der Erhaltung der globalen und der lokalen Struktur der Daten betrachtet werden kann.

Für den t-SNE-Algorithmus ist die Komplexität ein sehr wichtiger Hyperparameter, denn sie bestimmt die effektive Anzahl der Nachbarn, die jeder Punkt bei der Dimensionalitäts-Reduktion berücksichtigt.

Die Lernrate ist ein grundlegendes Konzept bei Algorithmen für maschinelles Lernen und Optimierung und spielt eine wichtige Rolle bei Trainingsmodellen und der Optimierung ihrer Performance während des Lernprozesses.

Im Wesentlichen bestimmt die Lernrate, wie sehr die Modell-Parameter während jeder Iteration des Optimierungsalgorithmus angepasst werden sollten.

Beim maschinellen Lernen misst die "Verlustfunktion" den Fehler zwischen der vorhergesagten und der tatsächlichen Ausgabe eines Modells für maschinelles Lernen, wobei es Ziel ist, diese Verlustfunktion zu minimieren, indem die Modell-Parameter angepasst werden, was die Genauigkeit des Modells verbessert.

Die Lernrate steuert die Größe dieser Parameteraktualisierungen und beeinflusst die Geschwindigkeit und Stabilität des Optimierungsprozesses.

Eine hohe Lernrate kann zu einer schnelleren Konvergenz führen, kann aber auch dazu führen, dass der Optimierungsalgorithmus die optimale Lösung übertrifft oder oszilliert.

Andererseits kann eine niedrige Lernrate zu einer langsamen Konvergenz führen und in suboptimalen Lösungen stecken bleiben.

Dann werden paarweise Distanzen oder Ähnlichkeiten zwischen Einbettungen des Referenz-Datensatzes REF_DS und den privaten Datensätzen berechnet.

Die Berechnung der Ähnlichkeit kann beispielsweise durch die Kosinus-Ähnlichkeit zwischen den t-SNE-Einbettungen des Referenz-Datensatzes REF_DS und denen des privaten Datensatzes LD1-LD3 jedes Klienten C1-C3 erfolgen.

Die Berechnung der Ähnlichkeit kann beispielsweise auch durch die euklidische Distanz erfolgen, wenn dies für die jeweiligen Anwendung des technischen Geräts TD1-TD3 geeignet ist.

Anschließend werden Klienten C1-C3 ausgewählt, deren Einbettungen, beziehungsweise Zielparameter, innerhalb eines bestimmten Ähnlichkeits-Schwellwerts, beziehungsweise ein vorbestimmter Anwendungs-Wertebereich, der Einbettungen des Referenz-Datensatzes REF_DS liegen.

Dadurch wird sichergestellt, dass die ausgewählten Klienten C1-C3 über relevante Datenverteilungen verfügen, die dem Referenz-Datensatz REF_DS ähneln.

Optional können die Top-N-Klienten C1-C3 basierend auf Ähnlichkeits-Bewertungen ausgewählt werden.

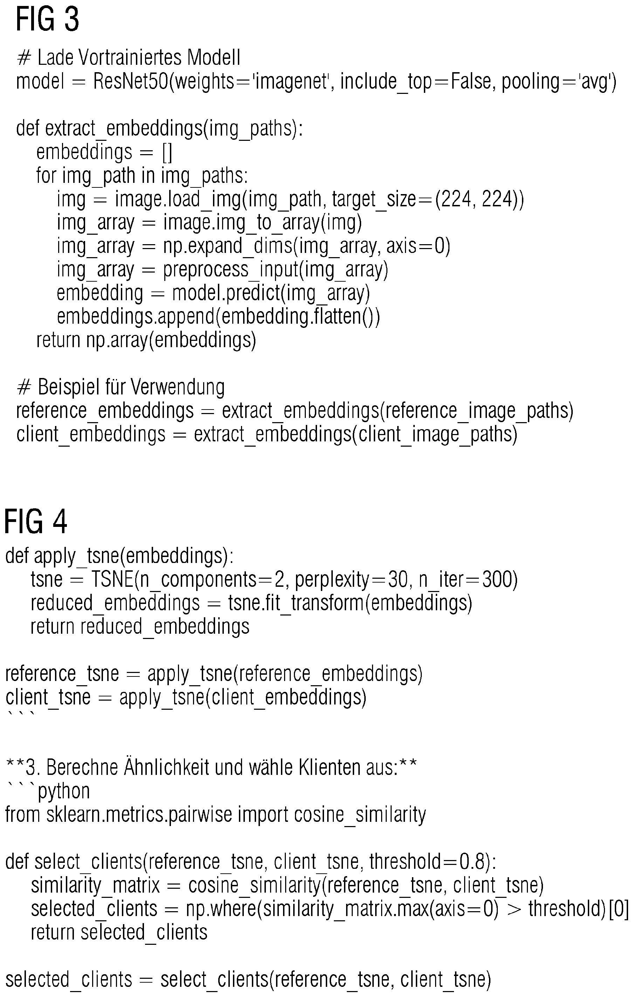

Fig. 3 zeigt ein Beispiel zur Berechnung von Einbettungen in Form eines Pseudo-Codes.

Die Einbettungen sind als Zielparameter für das jeweiligen Modell zu verstehen.

Fig. 4 zeigt ein Beispiel für die Anwendung von t-SNE in Form eines Pseudo-Codes.

Das bekannte Verfahren t-SNE dient dazu, die Dimensionalität der Einbettungen für die Visualisierung und Ähnlichkeitsberechnung zu reduzieren.

*Unabhängig vom grammatikalischen Geschlecht eines bestimmten Begriffes sind Personen mit männlicher, weiblicher oder anderer Geschlechteridentität mit umfasst.*

### Bezugszeichenliste:

- C1-C3: Klient
- CD1-CD3: Steuervorrichtung
- FM: Grund-Modell
- GM: globalen Modell
- LD1-LD3: lokale Daten
- LM1-LM3: lokales Modell
- REF_DS: Referenz-Datensatz
- S: Server
- TD1-TD3: technisches Gerät

## Patentansprüche

1. Computer-implementiertes Verfahren zum Betrieb eines technischen Geräts (TD1-TD3) mit einer Steuervorrichtung (CD1-CD3), welche von einem jeweiligen Klienten (C1-C3) eines Klienten-Server-Systems mit einem Server (S) und Klienten (C1-C3) umfasst ist, und folgende Schritte ausgeführt werden:
a) Bereitstellen eines Grund-Modells (FM) und eines Referenz-Datensatzes (REF_DS) an den Server (S),
b) Bereitstellen von jeweiligen trainierten lokalen Modellen (LM1-LM3) und des Referenz-Datensatzes (REF_DS) an die jeweiligen Klienten (C1-C3),
c) Durchführen einer jeweiligen Inferenz für das lokale Modell (LM1-LM3) mit dem Referenz-Datensatz (REF_DS) durch den jeweiligen Klienten (C1-C3),
d) Berechnen von zumindest einem jeweiligen Zielparameter durch den jeweiligen Klienten (C1-C3), welcher eine statistische Verteilungsfunktion zumindest eines Teils des lokalen Modells (LM1-LM3) umfasst,
e) Übermitteln der jeweiligen lokalen Modelle (LM1-LM3) an den Server (S), und Aggregieren der lokalen Modelle (LM1-LM3) unter Anwendung des zumindest einen jeweiligen Zielparameters zu einem globalen Modell (GM), wobei ein vorbestimmter Anwendungs-Wertebereich für den zumindest einen jeweiligen Zielparameter angewendet wird,
f) Durchführen einer Wissens-Destillation des globalen Modells (GM), durch den Server (S),
g) Übermitteln des globalen Modells (GM) an die Klienten (C1-C3),
h) Erzeugen von Steuerinstruktionen zum Betrieb des technischen Geräts (TD1-TD3) mithilfe des jeweiligen lokalen Modells (LM1-LM3) durch die jeweilige Steuervorrichtung (CD1-CD3), und Betreiben des jeweiligen technischen Geräts (TD1-TD3) durch die jeweilige Steuervorrichtung (CD1-CD3).

2. Verfahren nach dem vorhergehenden Anspruch, wobei nach der Wissens-Destillation im Schritt f) folgende Schritte ausgeführt werden:
f1) Bestimmen zumindest eines Modell-Verlusts zwischen dem Grund-Modell (FM) und dem globalen Modell (GM),
f2) Berechnen eines ersten Leistungs-Indikators für das Grund-Modell (FM) und eines zweiten Leistungs-Indikators für das globale Modell (GM), jeweils mithilfe eines Validierungs-Datensatzes, jeweils hinsichtlich der Leistung des jeweiligen Modells bei der Anwendung des Validierungs-Datensatzes, und
f3) Fortfahren im Schritt g), wenn der erste und zweite Leistungs-Indikator innerhalb eines vorgegebenen Leistungs-Wertebereich liegt.

3. Verfahren nach dem vorhergehenden Anspruch, wobei der erste Leistungs-Indikator der Kreuzentropie-Verlust und/oder der zweite Leistungs-Indikator der Destillations-Verlust ist.

4. Verfahren nach einem der vorhergehenden Ansprüche, wobei der Zielparameter Modell-Neuronen der jeweiligen lokalen Modelle (LM1-LM3) umfasst, welche in Lagen des Modells gelegen sind, die zwischen Eingangs-Knoten und Ausgangs-Knoten des lokalen Modells (LM1-LM3) liegen.

5. Verfahren nach einem der vorhergehenden Ansprüche, wobei der jeweilige zumindest eine Zielparameter eine Einbettung ist.

6. Klienten-Server-System zum Betrieb eines technischen Geräts (TD1-TD3) mit einer Steuervorrichtung (CD1-CD3), welche von einem jeweiligen Klienten (C1-C3) des Klienten-Server-Systems mit einem Server (S) und Klienten (C1-C3) umfasst ist, und das Klienten-Server-System dazu eingerichtet ist, die vorhergehenden Verfahrens-Schritte auszuführen.

7. Computer-Programm-Produkt, umfassend Befehle, die bei der Ausführung des Programms durch das Klienten-Server-System nach einem der vorhergehenden System-Ansprüche dieses veranlassen, das Verfahren/die Schritte des Verfahrens nach einem der vorhergehenden Verfahrens-Ansprüche auszuführen.
